# EUROPÄISCHE PATENTSCHRIFT

(11) **EP 2 536 579 B1**
(45) Veröffentlichungstag und Bekanntmachung des Hinweises auf die Patenterteilung: **11.12.2013**
(21) Anmeldenummer: 11700811.0
(22) Anmeldetag: 21.01.2011
(51) Int. Cl.: B60G 3/26, B60G 7/00, B60G 17/015, B62D 17/00

(54) **RADAUFHÄNGUNG FÜR EIN KRAFTFAHRZEUG**
WHEEL SUSPENSION FOR A MOTOR VEHICLE
SUSPENSION POUR VÉHICULE AUTOMOBILE

(30) Priorität: 15.02.2010 DE 102010007994
(43) Veröffentlichungstag der Anmeldung: 26.12.2012
(73) Patentinhaber: Audi AG, 85045 Ingolstadt (DE)
(72) Erfinder: SCHMID, Wolfgang, 85354 Freising (DE); BERINGER, Heinrich, 85095 Denkendorf (DE); MÜLLER, Hugo, 86701 Rohrenfels-Ballersdorf (DE); MEITINGER, Karl-Heinz, 81667 München (DE); MICHEL, Wilfried, 93339 Riedenburg (DE); KOSSIRA, Christoph, 85053 Ingolstadt (DE)
(86) Internationale Anmeldenummer: PCT/EP2011/000237
(87) Internationale Veröffentlichungsnummer: WO 2011/098207

(56) Entgegenhaltungen:
- WO-A1-96/07557
- DE-A1-102008 011 367
- US-A- 5 427 395

## Beschreibung

Die Erfindung betrifft eine Radaufhängung für ein Kraftfahrzeug nach dem Oberbegriff des Patentanspruches 1.

Bei sogenannten aktiven Lenksystemen, etwa für die Hinterachse von Fahrzeugen, kann der Radsturz bzw. die Radspur über ein Stellglied eingestellt werden, wodurch aktiv auf das Fahrverhalten des Kraftfahrzeugs Einfluss genommen werden kann.

Aus der DE 10 2008 011 367 A1 ist eine gattungsgemäße Radaufhängung für ein Fahrzeug bekannt. Ein Radträger der Radaufhängung weist ein, ein Fahrzeugrad drehbar lagerndes radseitiges Tragelement und ein achsseitiges Tragelement auf. Zwischen dem radseitigen und dem achsseitigen Tragelement ist ein Stellglied geschaltet. Bei dessen Betätigung wird das radseitige Tragelement zur Einstellung eines Spur- und/oder Sturzwinkels des Fahrzeugrades gegenüber dem achsseitigen Tragelement verstellt.

Das Stellglied besteht dabei aus zwei Drehteilen, die zwischen dem rad- und achsseitigen Tragelement angeordnet sind und um ihre Drehachsen zueinander verdrehbar sind. Durch Verdrehen eines der beiden Drehteile, alternativ auch beider Drehteile, kann das andere der beiden Drehteile auslenken. Entsprechend kann dadurch das am radseitigen Tragelement vorgesehene Fahrzeugrad um einen vorgegebenen Spur-/Sturzwinkel verschwenkt werden. Die beiden Drehteile können dabei nach Vorgabe einer Steuereinrichtung beliebig zueinander gegensinnig und/oder gleichsinnig betätigt werden, um eine geeignete Winkelverstellung des Fahrzeugrades zu erreichen.

Die rad- und achsseitigen Tragelemente des Radträgers können über ein zusätzliches Kardangelenk miteinander gekoppelt sein, über das ein Drehmoment, etwa ein Bremsmoment, vom radseitigen Tragelement auf das achsseitige Tragelement und damit zum Fahrzeugaufbau übertragen werden kann. Mit dem Kardangelenk wird daher ein Kräfte- und/oder Momentenpfad bereitgestellt, über den das Bremsmoment zuverlässig auf den Fahrzeugaufbau übertragen werden kann, und zwar unter Überbrückung des zwischen den Tragelementen geschalteten Stellgliedes.

Das Kardangelenk kann dabei mit an den Tragelementen angeformte radseitige und achsseitige Stege aufgebaut sein, die in Umfangsrichtung versetzt zueinander angeordnet sind und an einem mittigen Kardanringelement angelenkt sind. Die Lagerstellen zwischen den Stegen und dem Kardanringelement sind im Fahrbetrieb, insbesondere bei der Übertragung von Momenten oder Spur- und/oder Sturzverstellung, hohen Belastungen ausgesetzt. Daraus ergeben sich hohe Anforderungen an die Lagerstellen zwischen den Stegen und dem Kardanring. Von Relevanz sind dabei insbesondere toleranzbedingte Winkelabweichungen eines den jeweiligen Steg mit dem Kardanring drehgelenkig verbindenden Lagerbolzens. Wird etwa der Lagerbolzen über ein Nadellager drehgelagert, kann bereits ein geringer Axialversatz oder Winkelfehler der Lagerbohrung zu einem Kantentragen an den einzelnen Nadeln führen. Dies bedeutet, dass bei der Fertigung sehr enge Toleranzen verwendet werden müssen, da die zueinander diametral gegenüberliegenden Lagerstellen koaxial verlaufen müssen, um Verspannungen im Kardangelenk zu vermeiden.

Die Aufgabe der Erfindung besteht darin, eine Radaufhängung für ein Fahrzeug bereitzustellen, bei dem dauerhaft eine einwandfreie Funktion gewährleistet ist.

Die Aufgabe ist durch die Merkmale des Patentanspruches 1 gelöst. Bevorzugte Ausführungsformen der Erfindung sind in den Unteransprüchen offenbart.

Gemäß dem kennzeichnenden Teil des Patentanspruches 1 sind die radseitigen und achsseitigen Stege des Kardangelenks jeweils über ein Kugelgelenk am Kardanringelement angelenkt. Im Vergleich zu anderen Lagerarten, etwa einer Nadellagerung oder einer zylindrisch ausgebildeten Gleitlagerung, ergeben sich bei einer Kugelgelenkverbindung keine Verkippungen oder Schrägstellungen aufgrund von Winkelfehlern und Achsversätzen. Das Kugelgelenk kann vielmehr solche Fertigungstoleranzen durch einfache Schwenkbewegungen ausgleichen. Mit dem erfindungsgemäß eingesetzten Kugelgelenk ergibt sich außerdem aufgrund des Flächenkontakts zwischen den Laufflächen eine Tragzahl, die bei gleich großem Bauraum wesentlich höher ist als bei einem entsprechenden Nadellager.

In dem erfindungsgemäßen Kugelgelenk sind der jeweilige Steg und das damit zusammenwirkende Kardanringelement jeweils Gelenkpartner, von denen ein erster Gelenkpartner mit einem konvexen Kugelabschnitt ausgebildet sein kann. Der konvexe Kugelabschnitt des ersten Gelenkpartners kann dabei in einer Kugelschale des zweiten Gelenkpartners gleitbeweglich gelagert sein.

In einer technischen Realisierung kann die Lagerschale ein hülsenförmiges Außenteil des Kugelgelenks bilden, in dem der konvexe Kugelabschnitt eingesetzt ist. Das mit einem zylindrischen Außenmantel gebildete Außenteil kann daher in einem einfachen Einpressvorgang in eine entsprechende Aufnahmebohrung eines der Gelenkpartner eingepresst werden.

Der in der Kugelschale gleitbeweglich gelagerte konvexe Kugelabschnitt kann materialeinheitlich und einstückig am anderen Gelenkpartner ausgebildet sein. Bevorzugt ist es jedoch, den konvexen Kugelabschnitt als ein separates hülsenförmiges Innenteil auszubilden, das von einem der Gelenkpartner getragen werden kann.

Fertigungstechnisch von Vorteil ist es dabei, wenn sowohl der konvexe Kugelabschnitt als auch die konkave Kugelschale als hülsenförmige Innen-und Außenteile in einer vorgefertigten Baueinheit vorgehalten werden können. Diese Baueinheit kann bei der Montage in eine Aufnahme eines der Gelenkpartner eingesetzt werden. Dabei kann das hülsenförmige Innenteil des Kugelgelenkes unter Presspassung auf einen Lagerbolzen geschoben werden, der im anderen Gelenkteil eingesetzt, insbesondere eingepresst, ist.

Entsprechend kann daher der als hülsenförmiges Innenteil gefertigte konvexe Kugelabschnitt unmittelbar auf dem Lagerbolzen sitzen. Hierbei kann der konvexe Kugelabschnitt in einem Vormontageschritt bereits spielfrei an die konkave Kugelkontur der Kugelschale, etwa in einem Rollvorgang, angelegt werden. Der konvexe Kugelabschnitt kann beispielsweise dabei aus Bronze oder Stahl gefertigt sein.

Die zugehörige Lauffläche am konvexen Kugelabschnitt kann zusätzlich teflonbeschichtet sein, um ein sogenanntes Stick-Slip-Verhalten zu reduzieren und so eine leichtgängige kardanische Auslenkung zu gewährleisten.

In einer bevorzugten Ausführungsform kann das Kardanringelement einen fensterartigen Durchbruch aufweisen, in das der vom achsseitigen oder radseitigen Tragelement kommende Steg einragt. Der Lagerbolzen kann in diesem Fall in gegenüberliegende Lagerbohrungen des fensterartigen Durchbruchs des Ringelementes eingesetzt sein, während dessen mittlerer konvexer Kugelabschnitt spielfrei in der Kugelschale des einragenden Steges sitzt.

Bevorzugt kann der Lagerbolzen drehfest in Lagerbohrungen des Ringelementes eingepresst sein. Der Lagerbolzen kann hierzu einen radial nach außen ragenden Ringbund aufweisen, wobei der Lagerbolzen in die Lagerbohrung des Kardanringelementes einpressbar ist, bis dieser Ringbund in Anlage mit dem Kardanringelement kommt.

Zwischen dem achsseitigen und dem radseitigen Tragelement kann ein Stellglied geschaltet sein. Bei dessen Betätigung kann das radseitige Tragelement zur Einstellung des Spur- und/oder Sturzwinkels des Fahrzeugrades verstellt werden. Mit Hilfe des Kardangelenkes können Drehmomente, etwa ein Bremsmoment, vom radseitigen Tragelement auf das achsseitige Tragelement übertragen werden.

Nachfolgend ist ein Ausführungsbeispiel der Erfindung anhand der beigefügten Figuren gezeigt.

Es zeigen:
- Fig. 1: in einer Prinzipdarstellung eine Radaufhängung mit einem Fahrzeugrad,
- Fig. 2: in einer vergrößerten Schnittdarstellung ein in einer Lagerstelle des Kardangelenks der Radaufhängung angewendetes Kugelgelenk, und
- Fig. 3: die Lagerstelle des Kardangelenks in einer Explosionsdarstellung.

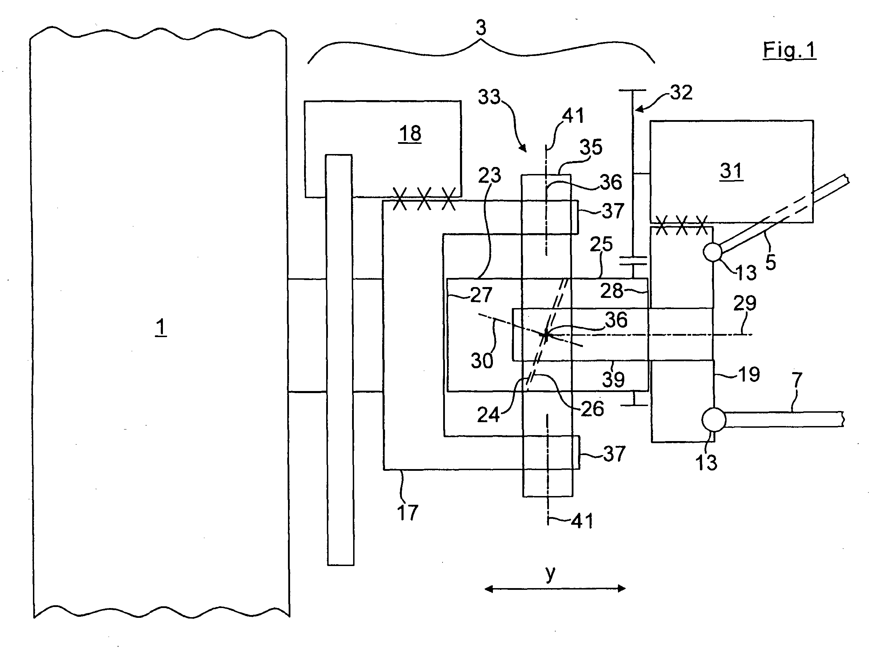

In der Fig. 1 ist eine Radaufhängung für beispielsweise eine Querlenkerachse dargestellt, bei der ein das Fahrzeugrad 1 tragender Radträger 3 mittels eines oberen Querlenkers 5 und eines unteren Querlenkers 7 über nicht weiter dargestellte aufbauseitige Lenkerlager schwenkbar am Fahrzeugaufbau angebunden ist. Die radträgerseitigen Lenkerlager 13 sind von üblichem Aufbau.

Gemäß der Fig. 1 weist der Radträger 3 ein radseitiges Tragelement 17 sowie ein achsseitiges Tragelement 19 auf. Am radseitigen Tragelement 17 ist das Fahrzeugrad 1 über eine Radnabe in einem nicht gezeigten Radlager des radseitigen Tragelements 17 gelagert. Außerdem ist am radseitigen Tragelement 17 eine angedeutete Bremsanlage 18 angebracht.

Zwischen den beiden Tragelementen 17, 19 des Radträgers 3 ist ein Stellglied geschaltet, bei dessen Betätigung der Spur- und/oder Sturzwinkel des Fahrzeugrads 1 einstellbar ist. Das Stellglied weist ein radseitiges Drehteil 23 und ein achsseitiges Drehteil 25 auf. Die beiden Drehteile 23, 25 sind über schräggestellte Steuerflächen 24, 26 miteinander in Anlage. Mit den, den Tragelementen 17, 19 zugewandten Stirnseiten 27, 28 der Drehteile 23, 25 sind die beiden Drehteile 23, 25 des Stellgliedes jeweils in Gleitkontakt oder Wälzkontakt mit den beiden Tragelementen 17, 19.

Das achsseitige Drehteil 25 ist jeweils um eine im Wesentlichen in Fahrzeugquerrichtung y verlaufende Drehachse 29 drehbar, während das radseitige Drehteil 23 um eine dazu schräggestellte Drehachse 30 drehbar ist, die zu den beiden Steuerflächen 24, 26 senkrecht verläuft. Die beiden Drehteile 23, 25 sind jeweils mittels Antriebsmotoren drehbetätigbar, von denen in der Fig. 1 lediglich der Antriebsmotor 31 gezeigt ist. Dieser ist am achsseitigen Tragelement 19 befestigt und über einen angedeuteten Getriebezug 32 mit dem Drehteil 25 in Verbindung. Analog ist am Tragelement 17 ein Antriebsmotor befestigt, der über einen Getriebezug mit dem Drehteil 23 in Verbindung ist. Die beiden Antriebsmotoren sind durch eine hier nicht gezeigte Steuereinrichtung ansteuerbar, mittels der die beiden Drehteile 23, 25 des Stellgliedes zueinander derart verdrehbar sind, dass sich ein jeweils geforderter Spur- und/oder Sturzwinkel des Fahrzeugrades 1 einstellt.

Die beiden Steuerflächen 24, 26 liegen in einer schräggestellten Drehebene. Beim Verdrehen der beiden Drehteile 23, 25 wälzen oder gleiten die in Anlage befindlichen Steuerflächen 24, 26 in der schräggestellten Drehebene aufeinander ab.

Gemäß der Fig. 1 sind die beiden Tragelemente 17, 19 des Radträgers 3 über ein Kardangelenk 33 miteinander gekoppelt. Das Kardangelenk 33 dient als eine Drehmomentenbrücke, über die Drehmomente vom radseitigen Tragelement 17 auf das achsseitige Tragelement 19 und damit auf den Fahrzeugaufbau übertragen werden können. Das aus den Drehteilen 23, 25 bestehende Stellglied bleibt demgegenüber von solchen Drehmoment-Belastungen verschont. Derart zu übertragende Drehmomente sind beispielsweise Bremsmomente oder Reaktionsmomente aus der Radaufstandskraft.

Das Kardangelenk 33 weist gemäß der Fig. 1 als ein zentrales Gelenkteil einen Kardanring 35 auf, der sich radial außerhalb um die Drehteile 23,25 des Stellgliedes erstreckt. Das radseitige Tragelement 17 ist jeweils über eine aus zwei Axialstegen 37 bestehende Kardangelenkgabel mit dem Kardanring 35 in Verbindung. Zusätzlich ist das achsseitige Tragelement 19 ebenfalls über zwei Axialstege 39 mit dem Kardanring 35 in Verbindung. Die achsseitigen Axialstege 39 sind zu den radseitigen Axialstegen 37 versetzt, so dass in der Fig. 1 lediglich ein achsseitiger Axialsteg 39 des Tragelements 19 ersichtlich ist.

Jedes der Axialstege 37, 39 bildet mit dem Kardanring 35 Lagerstellen 36. Die Axialstege 37, 39 des Kardangelenks 33 sind dabei an jeder Lagerstelle 36 über Lagerbolzen 41, die in der Fig. 1 lediglich strichpunktiert angedeutet sind, am Kardanring 35 drehgelenkig angelenkt, wodurch eine kardanische Ausgleichsbewegung während einer Spur- und/oder Sturzverstellung stattfinden kann.

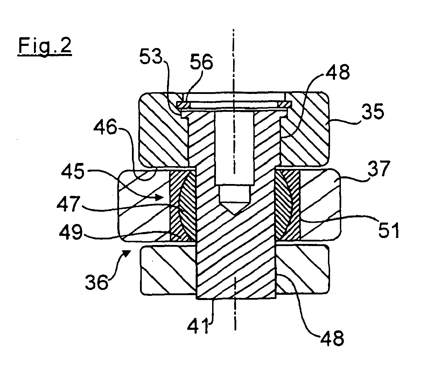

Eine der oben genannten Lagerstellen 36 zwischen den Axialstegen 37, 39 und dem Kardanring 35 ist in der Fig. 2 in Seitenschnittdarstellung sowie vergrößert gezeigt. Demzufolge ist der gezeigte Axialsteg 37 über ein Kugelgelenk 45 mit dem Kardanring 35 in Verbindung. Zur Ausbildung des Kugelgelenkes 45 weist der Kardanring 35 an der Lagerstelle 36 einen fensterartigen Durchbruch 46 auf, in dem der Axialsteg 37 einragt. Der fensterartige Durchbruch 46 weist gegenüberliegende Lagerbohrungen 48 auf, in die die Bolzenenden des Lagerbolzens 41 eingepresst sind. Zwischen den beiden Bolzenenden weist der Lagerbolzen 41 in etwa mittig einen konvexen Kugelabschnitt 47 auf. Dieser ist gemäß der Fig. 2 gleitbeweglich sowie spielfrei in einer Kugelschale 49 gelagert. Die Kugelschale 49 ist wiederum in einer in etwa fluchtend zu den Lagerbohrungen 48 ausgerichteten Aufnahmebohrung 51 des Axialsteges 37 eingesetzt.

Das in der Fig. 2 gezeigte obere Bolzenende ist mit einem Ringbund 53 ausgebildet, der mit einer korrespondierenden in der Lagerbohrung 48 gebildeten Ringschulter in Anlage ist. Zur Sicherung des Lagerbolzens 41 in den beiden Lagerbohrungen 48 ist im Bereich oberhalb des Ringbundes 53 ein Spannring 56 vorgesehen. Dieser ist im Vergleich zum Ringbund 53 radial ausgeweitet und in einen radial nach außen in der Lagerbohrung 48 gebildeten Einstich eingesetzt.

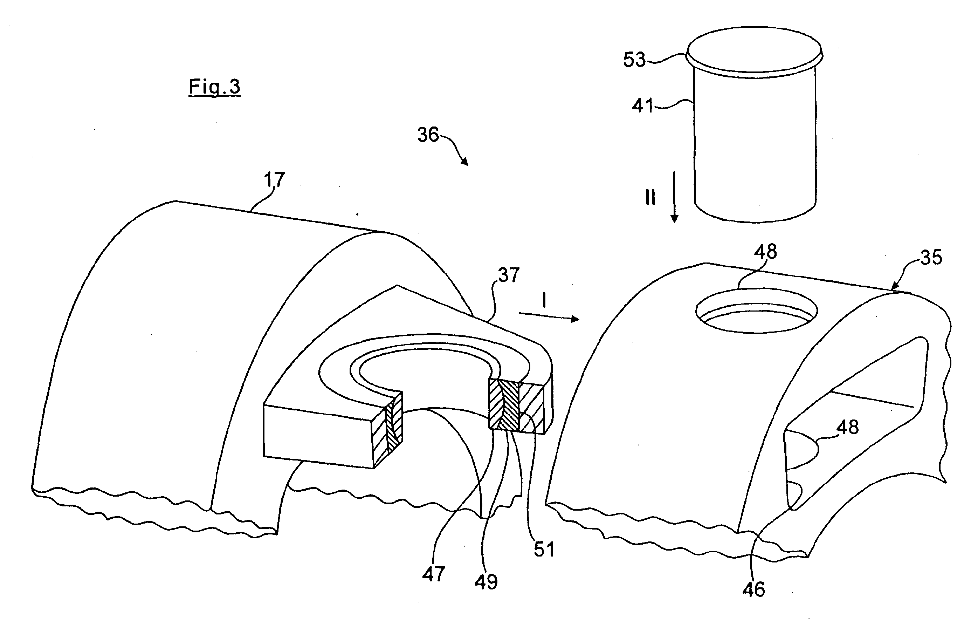

Die in der Fig. 2 gezeigte Lagerstelle 36 ist in der Fig. 3 in Explosionsdarstellung wiedergegeben.

Demzufolge ist der konvexe Kugelabschnitt 47 ein hülsenartiges Innenteil, das bereits in einem Vormontageschritt in die Kugelschale 49 eingesetzt ist. Die Kugelschale 49 ist ein hülsenartiges Außenteil, das mit seiner zylindrischen Außenmantelfläche in die Aufnahmebohrung 51 des Axialstegs 37 zum Beispiel eingepresst ist.

Im weiteren Montageverlauf wird der Axialsteg 37 des Tragelements 17 in den fensterartigen Durchbruch 46 des Kardanrings 35 in einer Bewegungsrichtung I eingeschoben, bis die vom hülsenartigen Innenteil 47 des Kugelgelenks 45 begrenzte Bohrung mit den Lagerbohrungen 48 des Kardanrings 35 fluchtend ausgerichtet sind. Anschließend wird in einem Pressvorgang II der Lagerbolzen 41 in die Lagerbohrungen 48 eingepresst.

**Bezugszeichenliste**

| | | | |
|---|---|---|---|
| 1 | Fahrzeugrad | 53 | Ringbund |
| 3 | Radträger | 56 | Spannring |
| 5, 7 | Querlenker | | |
| 13 | Lenkerlager | | |
| 17 | Radseitiges Tragelement | | |
| 18 | Bremsanlage | | |
| 19 | achsseitiges Tragelement | | |
| 24 | Steuerfläche | | |
| 25 | achsseitiges Drehteil | | |
| 26 | Steuerfläche | | |
| 27, 28 | Stirnseiten | | |
| 29, 30 | Drehachsen | | |
| 31 | Antriebsmotor | | |
| 32 | Getriebezug | | |
| 33 | Kardangelenk | | |
| 35 | Kardanring | | |
| 36 | Lagerstellen | | |
| 37, 39 | Axialstege | | |
| 41 | Lagerbolzen | | |
| 45 | Kugelgelenk | | |
| 46 | Durchbruch | | |
| 47 | konvexer Kugelabschnitt | | |
| 48 | Lagerbohrung | | |
| 49 | konkave Kugelschale | | |
| 51 | Aufnahmebohrung | | |

## Patentansprüche

1. Radaufhängung für ein Fahrzeug, mit einem ein Fahrzeugrad (1) drehbar lagerndes radseitiges Tragelement (17) und einem achsseitigen Tragelement (19), wobei das radseitige Tragelement (17) zur Einstellung eines Spur- und/oder Sturzwinkels gegenüber dem achsseitigen Tragelement (19) verstellbar ist, wobei die achs- und radseitigen Tragelemente (17, 19) mit einem Kardangelenk (33) gekoppelt sind, bei dem radseitige und achsseitige Stege (37, 39) der Tragelemente (17, 19) über Lagerstellen (36) an einem Kardanringelement (35) angelenkt sind, **dadurch gekennzeichnet, dass** an den Lagerstellen (36) die Stege (37, 39) der Tragelemente (17, 19) über Kugelgelenke (45) am Kardanringelement (35) angelenkt sind.

2. Radaufhängung nach Anspruch 1, **dadurch gekennzeichnet, dass** das Kugelgelenk (45) einen konvexen Kugelabschnitt (47) aufweist, der in einer konkaven Kugelschale (49) des anderen Gelenkpartners gleitbeweglich gelagert ist.

3. Radaufhängung nach einem der vorhergehenden Ansprüche, **dadurch gekennzeichnet, dass** in jeder der Lagerstellen (36) der Steg (37, 39) über ein Bolzenelement (41) mit dem Kardanringelement (35) verbunden ist.

4. Radaufhängung nach Anspruch 2 oder 3, **dadurch gekennzeichnet, dass** der konvexe Kugelabschnitt (47) des Kugelgelenks (45) auf dem Bolzenelement (41) sitzt.

5. Radaufhängung nach einem der Ansprüche 1 bis 4, **dadurch gekennzeichnet, dass** die konkave Kugelschale (49) ein hülsenförmiges Außenteil des Kugelgelenks (45) bildet, in dem der konvexe Kugelabschnitt (47) eingesetzt ist.

6. Radaufhängung nach einem der vorhergehenden Ansprüche, **dadurch gekennzeichnet, dass** der konvexe Kugelabschnitt (47) und die Kugelschale (49) als eine vorgefertigte Baueinheit ausgebildet sind, die in eine Aufnahme eines der Gelenkpartner einsetzbar ist.

7. Radaufhängung nach einem der vorhergehenden Ansprüche, **dadurch gekennzeichnet, dass** das Kardanringelement (35) einen fensterartigen Durchbruch (46) aufweist, in das der Steg (37, 39) einragt.

8. Radaufhängung nach Anspruch 7, **dadurch gekennzeichnet, dass** das Bolzenelement (41) in Axialrichtung an beiden Seiten des konvexen Kugelabschnitts (47) Bolzenenden aufweist, die in gegenüberliegende Lagerbohrungen (48) des fensterartigen Durchbruchs (46) eingesetzt, insbesondere eingepresst, sind.

9. Radaufhängung nach einem der vorhergehenden Ansprüche, **dadurch gekennzeichnet, dass** zwischen dem achsseitigen und dem radseitigen Tragelement (17, 19) ein Stellglied (23, 25) geschaltet ist, bei dessen Betätigung das radseitige Tragelement (17) zur Einstellung des Spur-und/oder Sturzwinkels verstellbar ist.

10. Radaufhängung nach einem der vorhergehenden Ansprüche, **dadurch gekennzeichnet, dass** über das Kardangelenk (33) ein Drehmoment, insbesondere ein Bremsmoment, vom radseitigen Tragelement (17) auf das achsseitige Tragelement (19) übertragbar ist.

## Claims

1. Wheel suspension for a vehicle, comprising a wheel-side support element (17) which rotatably mounts a vehicle wheel (1) and an axle-side support element (19), the wheel-side support element (17) being adjustable for setting a track angle and/or a camber angle in relation to the axle-side support element (19), the axle- and wheel-side support elements (17, 19) being coupled to a Cardan joint (33) in which wheel- and axle-side webs (37, 39) of the support elements (17, 19) are articulated to a Cardan ring element (35) by means of bearings (36), **characterised in that** the webs (37, 39) of the support elements (17, 19) are articulated to the Cardan ring element (35) at the bearings (36) by means of ball joints (45).

2. Wheel suspension according to claim 1, **characterised in that** the ball joint (45) comprises a convex ball portion (47) which is mounted so as to be slidable in a concave ball shell (49) of the other joint partner.

3. Wheel suspension according to any of the preceding claims, **characterised in that** in each of the bearings (36) the web (37, 39) is connected to the Cardan ring element (35) by means of a bolt element (41).

4. Wheel suspension according to either claim 2 or claim 3, **characterised in that** the convex ball portion (47) of the ball joint (45) rests on the bolt element (41)

5. Wheel suspension according to any of claims 1 to 4, **characterised in that** the concave ball shell (49) forms a sleeve-shaped outer part of the ball joint (45) in which the convex ball portion (47) is inserted.

6. Wheel suspension according to any of the preceding claims, **characterised in that** the convex ball portion (47) and the ball shell (49) are designed as a prefabricated component which can be inserted into a socket of one of the joint partners.

7. Wheel suspension according to any of the preceding claims, **characterised in that** the Cardan ring element (35) comprises a window-like opening (46) into which the web (37, 39) projects.

8. Wheel suspension according to claim 7, **characterised in that** the bolt element (41) comprises bolt ends on both sides of the convex ball portion (47) in the axial direction, which ends are inserted, in particular press-fitted, into opposed bearing holes (48) of the window-like opening (46).

9. Wheel suspension according to any of the preceding claims, **characterised in that** an adjusting member (23, 25) is connected between the axle-side support element and the wheel-side support element (17, 19), upon the actuation of which member the wheel-side support element (17) can be adjusted for setting the track angle and/or camber angle.

10. Wheel suspension according to any of the preceding claims, **characterised in that** a torque, in particular a braking torque, can be transmitted from the wheel-side support element (17) to the axle-side support element (19) by means of the Cardan joint (33).

## Revendications

1. Suspension pour véhicule automobile, comprenant un élément de support côté roue (17), montant en rotation une roue de véhicule (1), et un élément de support côté essieu (19), l'élément de support côté roue (17) étant mobile par rapport à l'élément côté essieu (19) pour ajuster un angle de pincement et/ou de carrossage, les éléments de support côté essieu et roue (17, 19) étant couplés à un joint de Cardan (33), dans lequel des entretoises côté roue et côté essieu (37, 39) des éléments de support (17, 19) sont articulées sur un élément de suspension à la Cardan (35) via des points d'appui (36), **caractérisée en ce que** sur les points d'appui (36) les entretoises (37, 39) des éléments de support (17, 19) sont articulés sur l'élément de suspension à la Cardan (35) via des articulations sphériques (45).

2. Suspension selon la revendication 1, **caractérisée en ce que** l'articulation sphérique (45) présente une section sphérique convexe (47) qui est montée de manière coulissante dans une rotule concave (49) de l'autre partenaire d'articulation.

3. Suspension selon l'une des revendications précédentes, **caractérisée en ce que** dans chacun des points d'appui (36) l'entretoise (37, 39) est reliée à l'élément de suspension à la Cardan (35) via un boulon (41).

4. Suspension selon la revendication 2 ou 3, **caractérisée en ce que** la section sphérique convexe (47) de l'articulation sphérique (45) repose sur le boulon (41).

5. Suspension selon l'une des revendications 1 à 4, **caractérisée en ce que** la rotule concave (49) forme une partie externe de l'articulation sphérique (45) en forme de manchon, dans laquelle la section sphérique concave (47) est installée.

6. Suspension selon l'une des revendications précédentes, **caractérisée en ce que** la section sphérique convexe (47) et la rotule (49) sont configurées comme une unité préfabriquée qui peut être installée dans un logement d'un partenaire d'articulation.

7. Suspension selon l'une des revendications précédentes, **caractérisée en ce que** l'élément de suspension à la Cardan (35) présente une ouverture (46) dans laquelle l'entretoise (37, 39) fait saillie.

8. Suspension selon la revendication 7, **caractérisée en ce que** le boulon (41) présente dans la direction axiale aux deux extrémités de la section sphérique convexe (47) des extrémités de boulon, qui sont installées, notamment enfoncées, dans des alésages d'appui (48) de l'ouverture de type fenêtre (46).

9. Suspension selon l'une des revendications précédentes, **caractérisée en ce que**, entre les éléments de support côté essieu et côté roue (17, 19) est monté un organe de réglage (23, 25) dont l'actionnement rend l'élément de support côté roue (17) mobile pour ajuster l'angle de pincement et/ou de carrossage.

10. Suspension selon l'une des revendications précédentes, **caractérisée en ce qu'**un couple de rotation, notamment un couple de freinage, peut être transféré depuis l'élément de support côté roue (17) vers l'élément de support côté essieu (19) via le joint de Cardan (33).
